# EUROPEAN PATENT APPLICATION

(11) **EP 1 009 177 A2**
(43) Date of publication of application: **14.06.2000**
(21) Application number: 99204188.9
(22) Date of filing: 07.12.1999
(51) Int. Cl.: H04Q 7/26

(54) **Wireless telephone location system and method for emergency calls**

(30) Priority: 11.12.1998 US 209283
(71) Applicant: ECI TELECOM LTD., 49 130 Petach Tikva (IL)
(72) Inventor: Ben-Yair, Isaac, Rishon Letzion, 75439 (IL)
(74) Representative: Waxweiler, Jean

(57) **Abstract**

An emergency call location tracing system comprising a wireless PBX composed of a number of base stations, each having a specific range and area of coverage. When emergency services (911) are dialed from any mobile telephone, the PBX intercepts the 911 call, and dynamically provides special treatment for this type of call before transmitting it. The PBX operates to identify the base station through which the call was transferred, and provides the caller extension number or DID number, and the base station being used, so that a phone number and location identifier are encoded within the coded information for the call being transmitted. The standard transmission protocol has subaddress fields for use in encoding this information so that it can be included within the transmitted phone call. When received by the emergency services provider, the coded information can be obtained by appropriate decoding techniques, and a translation table may be used to identify the physical location of the base station initiating the call. Thus, a mobile telephone which initiates an emergency call benefits from the inventive system since its physical location and extension number are coded with the telephone call itself, for use by the emergency service provider in quickly and more efficiently dispatching emergency services to the correct location

## Description

### FIELD OF THE INVENTION

The present invention relates to telecommunications systems and equipment, and more particularly, to an emergency call location tracing system for identifying the initiator of an emergency call routed over wireless transmission systems, in which a private branch exchange (PBX) is used to handle multiple telephone lines, hardwired and wireless, so that among a plurality of locations serviced by the PBX, a specific location can be identified for the initiator of the emergency call, enabling emergency services to be dispatched without delay to the correct location.

### BACKGROUND OF THE INVENTION

The emergency call system (911) implemented in the US and other countries to deal with life-threatening circumstances such as fire and violent crime has proven to be of inestimable value, since the system enables early dispatch of emergency services, such as firefighting crews and police teams. These systems are designed to identify the phone number initiating the emergency call, since it may be necessary to call this location back to obtain more information, and very often the caller is emotionally upset and cannot provide coherent information. However, the ability of the emergency system to identify the phone number of the location initiating the emergency call must also include the ability to identify and trace emergency calls that are handled by a PBX which services a multiple of telephone lines at different locations.

Prior art emergency call tracing systems have addressed the problem of the interface between the hardwired, multiple telephone line PBX and the emergency call system, as described in US Patents 5,347,568 and 5, 235,630 to Moody et al. These patents describe a device for identifying a specific station, from among a plurality of physically dispersed locations serviced by a common PBX, which has initiated an emergency call. The device includes a harmonization module between the PBX and the public switched telephone network (PSTN) capable of transmitting identification information regarding the initiation of the emergency call from a telephone station serviced by the PBX, and translating the information into a phone number representative of the station. The emergency services and public safety officials are typically given a translation table which converts the phone numbers into physical locations, saving valuable time in dispatch of emergency services to locations having multiple, PBX-serviced telephone stations.

The tremendous increase in the use of wireless telephone transmission systems adds another dimension of complexity to the systems described above, since there are wireless PBX stations which service multiple wireless, mobile telephones. Many of these mobile telephones may be associated at any one time with a specific base station, having a specific range and area of coverage. If the caller moves beyond the range of the designated base station, the nearby base station will handle the call. In the case of a wireless PBX, the information normally used to identify the location of the caller is of reduced value to the emergency services, since they require the physical location of the mobile telephone users. It is also necessary to insure that the emergency caller can be reached if more details are needed.

In the case of telephones which are DID extensions (Direct Inward Dial, i.e. the extension can be directly dialed from outside without reaching an attendant, automated or otherwise), the DID telephone number is mapped onto the transmission and sent out. In practice for many wireless PBX systems, wireless telephone numbers are not DID, but are rather telephone numbers that are forwarded from the mobile telephone user's base station when they are not there.

Therefore, it would be desirable to provide a solution to the problem of identifying and tracing emergency calls which are initiated by mobile telephones, so that appropriate emergency services and monitoring may be provided for those relying on emergency services to be dispatched to the correct location to handle crisis events.

### SUMMARY OF THE INVENTION

Accordingly, it is a principal object of the invention to overcome the disadvantages of prior art emergency call tracing systems, and provide a novel emergency call location tracing system for use with wireless telephone call transmission systems in which a mobile telephone has intitiated a call and its location must be identified.

In accordance with the principles of the present invention, there is provided in a wireless telephone system having at least a plurality of base stations at different locations servicing mobile telephones, a system for identifying the location of a mobile telephone which has initiated a call to an emergency call service location, said system comprising:
means for identifying an active base station which is relaying the initiated call to the emergency call service location;
means for encoding the initiated call with a location identifier associated with said active base station; and
means for transmitting said encoded initiated call to the emergency call service location,
such that when received at the emergency call service location, said location identifier can be provided for use in dispatching emergency services.

In the preferred embodiment, the emergency call location tracing system comprises a wireless PBX composed of a number of base stations, each having a specific range and area of coverage. When emergency services (911) are dialed from any mobile telephone, the PBX intercepts the 911 call, and dynamically provides special treatment for this type of call before transmitting it. The PBX operates to identify the base station through which the call was transferred, and provides the caller extension number or DID number, and the base station being used, so that a phone number and location identifier are encoded within the coded information for the call being transmitted. The standard transmission protocol has subaddress fields for use in encoding this information so that it can be included within the transmitted phone call.

When received by the emergency services provider, the coded information can be obtained by appropriate decoding techniques, and a translation table may be used to identify the physical location of the base station initiating the call.

Thus, a mobile telephone which initiates an emergency call benefits from the inventive system since its physical location and extension number are coded with the telephone call itself, for use by the emergency service provider in quickly and more efficiently dispatching emergency services to the correct location.

Other features and advantages of the invention will become apparent from the following drawings and description.

### BRIEF DESCRIPTION OF THE DRAWINGS

For a better understanding of the invention with regard to the embodiments thereof, reference is made to the accompanying drawings, in which like numerals designate corresponding elements or sections throughout, and in which:
Fig. 1 is a schematic layout diagram of a telephone system featuring a hard-wired PBX;
Fig. 2 is a schematic layout diagram of a telephone system featuring a PBX configured to service hard-wired and mobile telephones, for providing emergency call location tracing in accordance with the principles of the present invention;
Figs. 3a is a pictorial diagram of the coding fields according to the prior art; and
Figs. 3b-c are pictorial diagrams of a coded address in accordance with the present invention; and
Fig. 4 is a flowchart illustrating the operation of the inventive emergency call location tracing system of Fig 2.

### DETAILED DESCRIPTION OF A PREFERRED EMBODIMENT

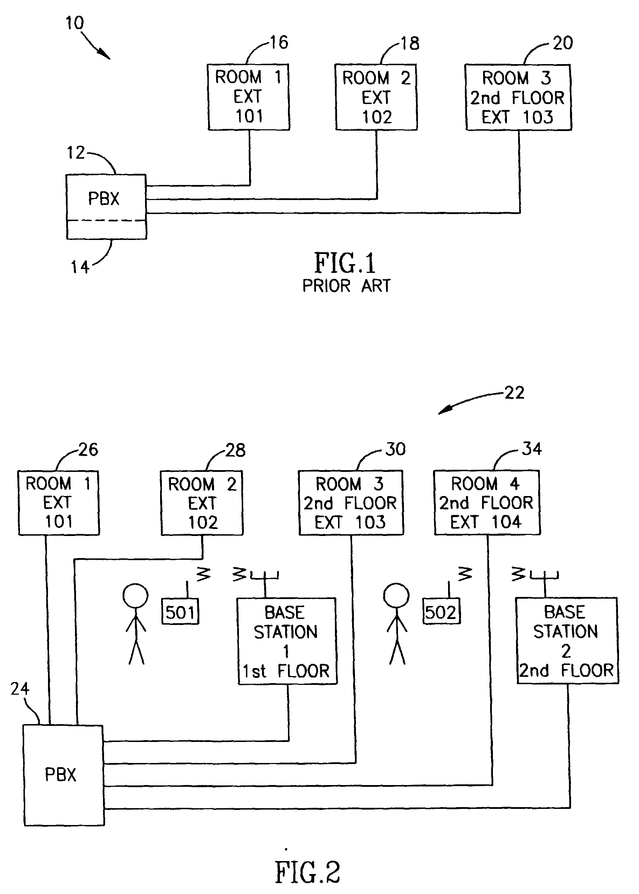

Referring now to Fig. 1, there is shown a prior art telephone system 10 featuring a hard-wired PBX 12, which includes a prior art device 14 for providing location identification information of a telephone which has initiated an emergency call. An example of prior art device 14 is provided in the background in connection with US Patents 5,347,568 and 5, 235,630 to Moody et al.

Device 14 is capable of identifying a specific station, from among a plurality of physically dispersed locations 16, 18 and 20 serviced by the common PBX 12, which has initiated an emergency call. The device transmits identification information regarding the initiation of the emergency call from a telephone station serviced by the PBX 12, and translates the information into a phone number representative of the station. The emergency services and public safety officials are typically given a translation table which converts the phone numbers into physical locations, saving valuable time in dispatch of emergency services to the correct location.

Referring now to Fig. 2, there is shown a schematic layout diagram of a telephone system 22 featuring a PBX 24 configured to service hard-wired and mobile telephones, for providing emergency call location tracing in accordance with the principles of the present invention.

The hard-wired telephones in this system 22 are represented by locations 26, 28, 30 and 34. The mobile telephones in system 22 are represented by mobile units 36 and 38, each of which operates via one of base stations 40, 42. Either of base stations 40, 42 is active dependent on whether the mobile telephone is within the range of operation of the base station. Thus, a call placed by mobile unit 36 while in the range of base station 40 would be handled by that base station.

In accordance with the present invention, PBX 24 is configured so that if an emergency call is placed by one of mobile units 36 or 38 in system 22, PBX 24 intercepts the call and identifies, dynamically, which of base stations 40, 42 was the source of the call. The PBX 24 contains a microcontroller which is aware of the active base station and therefore can identify which of them is associated with the emergency call, since the base station information is included in the dialing request data stream. Once it has identified the source of the call, PBX 24 proceeds to encode the caller extension number or DID number, as well as the base station being used. This encoded information is then transmitted, along with the telephone call itself, to the emergency services facility reached by the emergency call.

The technique of encoding the caller extension number and active base station can be implemented within the standard transmission protocol. The standard transmission protocol for transmitting calling party information is based on industry standards and is maintained in accordance with advisory groups such as Bellcore and CCITT (International Telegraph and Telephone Consultative Committee). In accordance with CCITT recommendation I.223 and ITU-T recommendation Q.931 (03/93) there exists a subaddress field within the transmission protocol which has maximum length of 20 octets, i.e., 20 groups of 8 bytes of data. These octets are designed to carry information elements, and one of these is dedicated to a calling party number information element, which carries the telephone number of the calling party, so that the recipient of the telephone call can identify the caller.

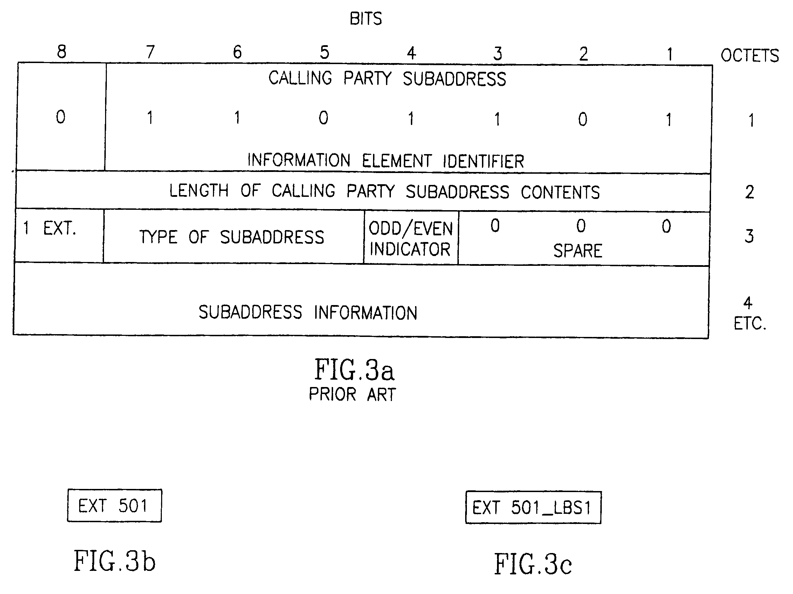

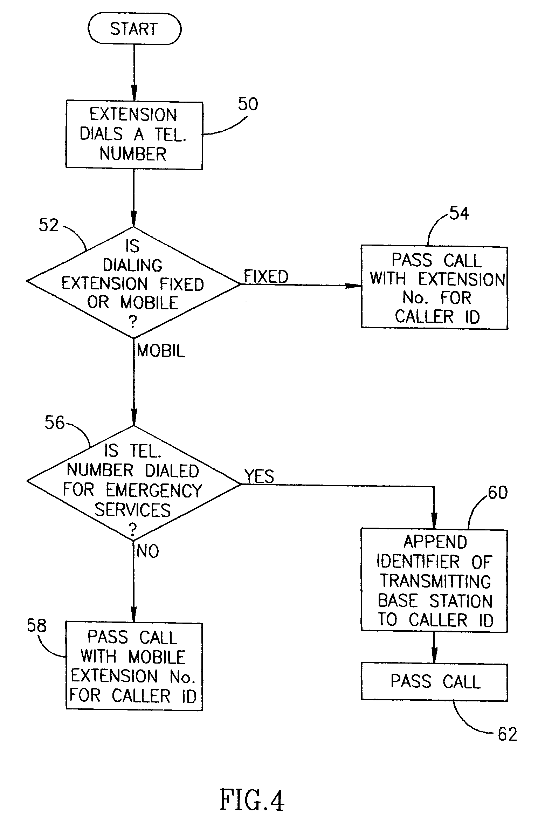

As illustrated in Fig. 3a, within the calling party number information element there is a subaddress which can be sent along with the calling party telephone number. Fig. 3a is a pictorial diagram of the calling party number information element as per the CCITT recommendation Q.931 03/93 (Fig. 4-17/Q.931, p.82). Bits 5, 6 and 7 of Byte (Octet) 3 are set to 010 respectively to identify the subaddress as User specified, and the length of the subaddress field is encoded in Byte 8. The maximum length of this subaddress information field is 20 Bytes, which is sufficient for the purpose of encoding additional information regarding the location of the base station of the calling party.

As illustrated in Fig. 3b, a coded address can be used to represent a telephone extension number in a PBX, such as "extension 501" by the symbolic representation "EXT501". This is commonly known as the caller ID information, and allows the receiving party to identify the caller's phone number.

In accordance with the present invention, as illustrated in Fig. 3c, the coded address may be extended to include added information, such as the location identification information of the base station. For example, after the extension number as shown in Fig. 4b, the letter "L"(location) may be addded followed by the location identification, such as BS1 (Base station 1). Any number of identifying plans could be used, including assigning a pseudo-number to each base station.

Alternatively, if the space in the subaddress field is sufficient, the location identification information could be sent directly, for example, as a string "X501L2NDFL" which could be interpreted as "extension 501, location 2nd floor", and this may be further condensed by eliminating the L symbol for location, and providing just the details.

Thus, the inventive method provides a transmission protocol with location identification information in addition to the calling party number, to identify the source of emergency calls from mobile telephones using a wireless PBX 24. The emergency services station which receives the emergency call can be provided with a translation table which translates the location identification information into a physical location for dispatching the emergency services team to the correct location.

Referring now to Fig. 4, there is shown a flowchart illustrating the operation of the inventive emergency call location tracing system of Fig 2. The software may be implemented in a microprocessor, such as an Intel Pentium or other equivalent microprocessor, forming part of the hardware configuration of PBX 24.

In block 50, the system operation begins with a mobile telephone extension which initiates a telephone call by dialing a telephone number. In block 52, it is determined whether the dialing extension initiating the call is a fixed or mobile telephone, and if fixed, then in block 54, the call is passed through PBX 24 with the caller ID extension number added to the transmission protocol. This is shown in the prior art diagram of Fig. 3a, indicating "EXT 501", for telephone extension 501.

If it is determined that the call was initiated by a mobile telephone, then in block 56, the type of call is determined. If the initiated call is not an emergency call, then in block 58 the call is passed by PBX 24 and only the caller ID information is added to the transmission protocol, similar to the procedure of block 54 for a fixed telephone. If, however, the initiated call is an emergency call, then in block 60 the location of the transmitting base station is added as a location identifier, per the procedures described previously with respect to Fig. 3c, and the call is passed in block 62 via PBX 24.

In summary, a mobile telephone which initiates an emergency call benefits from the inventive system and method since its physical location and extension number are coded with the transmission of the telephone call itself, for decoding and use by the emergency service provider in quickly and more efficiently dispatching emergency services to the correct location.

Having described the invention with regard to certain specific methods and embodiments thereof, it is to be understood that the description is not meant as a limitation, since further modifications may now suggest themselves to those skilled in the art, and it is intended to cover such modifications as fall within the scope of the appended claims.

## Claims

1. In a wireless telephone system having at least a plurality of base stations at different locations servicing mobile telephones, a system for identifying the location of a mobile telephone which has initiated a call to an emergency call service location, said system comprising:
means for identifying an active base station which is relaying the initiated call to the emergency call service location;
means for encoding the initiated call with a location identifier associated with said active base station; and
means for transmitting said encoded initiated call to the emergency call service location,
such that when received at the emergency call service location, said location identifier can be provided for use in dispatching emergency services.

2. The system of claim 1 wherein said encoding means comprises means for coding within a subaddress of a transmission coding field said location identifier associated with said active base station.

3. The system of claim 1 wherein the plurality of base stations are all associated with a private branch exchange (PBX) which has been modified to include said identifying, encoding and transmitting means to provide said location identifier for use in dispatching emergency services.

4. The system of claim 1 wherein the plurality of base stations are all associated with a PBX which has been modified to include an add-on device comprising said encoding means to provide said location identifier for use in dispatching emergency services.

5. The system of claim 1 wherein said means for identifying an active base station comprises a microcontroller for examining the base station information included in a dialing request data stream, to determine which of said plurality of base stations is active and has initiated the call.

6. The system of claim 1 wherein said identifying means provides caller identification information (caller ID) coded within a subaddress of a transmission coding field.

7. The system of claim 6 wherein said encoding means adds said location identifier to said caller ID information.

8. The system of claim 6 wherein said caller ID information includes a telephone extension number of a PBX, enabling the emergency call service location to redial the mobile telephone which has initiated the emergency call.

9. In a wireless telephone system having at least a plurality of base stations at different locations servicing mobile telephones, a method of identifying the location of a mobile telephone which has initiated a call to an emergency call service location, said method comprising the steps of:
identifying an active base station which is relaying the initiated call to the emergency call service location;
encoding the initiated call with a location identifier associated with said active base station; and
transmitting said encoded initiated call to the emergency call service location,
such that when received at the emergency call service location, said location identifier can be provided for use in dispatching emergency services.

10. The method of claim 9 wherein said encoding step is performed by coding within a subaddress of a transmission coding field said location identifier associated with said active base station.

11. The method of claim 9 wherein the plurality of base stations are all associated with a private branch exchange (PBX) which has been modified to include add-on procedures for performing said identifying, encoding and transmitting steps to provide said location identifier for use in dispatching emergency services.

12. The method of claim 9 wherein said identifying step is performed by a microcontroller for examining the base station information included in a dialing request data stream, to determine which of said plurality of base stations is active and has initiated the call.

13. The method of claim 9 wherein said identifying step comprises provision of caller identification information (caller ID) coded within a subaddress of a transmission coding field.

14. The method of claim 13 wherein said encoding step adds said location identifier to said caller ID information.

15. The method of claim 13 wherein said caller ID information includes a telephone extension number of a PBX, enabling the emergency call service location to
redial the mobile telephone which has initiated the emergency call.
